# EUROPEAN PATENT APPLICATION

(11) **EP 2 654 117 A1**
(43) Date of publication of application: **23.10.2013**
(21) Application number: 13151406.9
(22) Date of filing: 16.01.2013
(51) Int. Cl.: H01M 8/24

(54) **Installation for producing and supplying electricity including a fuel cell**

(30) Priority: 19.04.2012 IN DE12192012
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Binoist, Manuel, 110 011 New Delhi (IN); Kulshreshtha, Sachin, 110 011 New Delhi (IN); Sanglan, Patrick, 38180 Seyssins (FR)
(74) Representative: De Cuenca, Emmanuel Jaime

(57) **Abstract**

Installation for producing and supplying electricity including a fuel cell (9), a device (10, 11, 12) for supplying gaseous hydrogen to the fuel cell (9), the device (10, 11, 12) for supplying gaseous hydrogen comprising at least a bundle (11, 12) of a plurality of pressurized hydrogen cylinders (8), a control casing (10), the control casing (10) containing circuit for controlling and supplying the gas taken from the bundle(s) (11, 12) of cylinders (8) to the fuel cell (9), the circuit being selectively connected to the bundle(s) (11, 12) of cylinders (8) and to the fuel cell (9) and comprising at least a pressure regulator (23), the installation being arranged on a base (100), characterized in the that the base (100) includes a modular structure comprising a first tray (1) supporting a first bundle (12) of cylinders (8), a second tray (2) supporting a second bundle (11) of cylinders (8), a third tray (3) supporting the fuel cell (9), the first (1), the second (2) and the third (3) trays being different entities put side by side and being elevated with regard to the soil via respective legs (18), first (1) and second trays (2) forming supports surface which are situated in a plan different from the plan of the third (3) tray, that is to say at a different height with regard to the soil.

## Description

The invention concerns an installation for producing and delivering electricity.

The invention relates more particularly to an installation for producing and supplying electricity including a fuel cell, notably of proton exchanging membrane type, a device for supplying gaseous hydrogen under pressure to the fuel cell, the device for supplying gaseous hydrogen comprising at least a bundle of a plurality of pressurized hydrogen cylinders, a control casing, the control casing containing circuit for controlling and supplying the gas taken from the bundle(s)of cylinders to the fuel cell, the circuit being selectively connected to the bundle(s) of cylinders and to the fuel cell and comprising at least a pressure regulator, the installation being arranged on a base.

In countries where power grids are of poor quality, telecommunication sites are generally buffered by batteries and Diesel generators to maintain the quality of services provided to mobile users of telecommunication networks. In the event of main grid failure, the batteries take over until the generator starts for providing a continuous power supply. If the generator also faces a problem, the remaining power left in the batteries is used to power the main utilities until the intervention of a site technician or network feedback.

Two types of architectures are standardized for telecommunications facilities. A first type "Indoor" or "ID sites" has its equipments installed in a shelter protected from weather and external attacks. These shelters are equipped with air conditioners to keep inside a controlled temperature ensuring proper functioning and longevity to the equipments. The standard air conditioners are powered by alternating current and, when the main power grid fails, air conditioning unit stops. Air conditioning restarts when the diesel generator starts up. The battery provides continuous supply to the telecom equipments till the period Diesel generator starts in operation.

The second type "Outdoor' or 'OD sites', has its equipment installed outdoors or in ventilated cabinets. They have the latest equipments, including an extended temperature range that avoids the use of air conditioners.

In a context where telecom operators are increasingly concerned about their energy bills and CO2 footprint, the new sites will benefit from extensive works to reduce the energy consumption of the installation.

For existing sites, the most immediate measure to reduce emissions is to replace the back-up Diesel generator by a fuel cell.

For replacing a Diesel generator by a fuel cell on the site, several factors are important and need to be considered.

For example, site layout may vary depending upon the orientation and position of the different equipments at the site. In addition, soil bearing capacity will depend on soil characteristics. Moreover, those outdoor sites are faced with different seasons during the year like summer, winter, and rainy. Approach road to the site should also be carefully considered.

Conventional Diesel generators of outdoor sites are generally installed on a concrete bed of 3.0m x 1.5 m including the diesel fuel tank. The equivalent facility with a 5 kW power fuel cell needs a 1mx1m footprint plus two frames (bundles) of eight to sixteen bottles of hydrogen pressurized up to 200bars enclosed in a protective enclosure. The assembly is generally placed on a concrete bed of 4.25m x 2.5m. The concrete bed is made cast in-situ at site in a one piece pad.

This arrangement suffers however from several drawbacks.

For example, installing the fuel cell assembly will require a soil preparation before start-up of any solution at site and heavy equipments like crane to complete the solution.

Different soil conditions might need different components or consolidation settlements that might need months to years to develop.

Considering different components of soil requires efforts to redesign the concrete pad for each site. This is however a time and cost consuming activity for the deployment of a large number of sites.

Preparing a pad manually using heavy equipments requires more than two or three labours which incurs both time and efforts.

In addition, on a single concrete pad for fuel cell assembly, there are different dynamic and static loads because of rotating and static parts of the equipments. Those parts would need to be considered during designing a concrete pad for every site which has different soil characteristics.

In addition, after preparation of a concrete pad, a site needs to wait for two to five days for the deployment of fuel cell assembly because of curing time required by the concrete which varies during different geography and seasons. The curing time during winter might be longer than during summer which poses a time constraint for deployment during winter season.

In most of the areas, the preparation of concrete pad is impossible during rainy season which may lasts up to five months in some countries.

Known solutions require a large footprint (approximately 3.25m x 2.5 m) at the site for supporting fuel cell assembly.

The solution cannot be standardized considering varying loads and different soil characteristics. In addition, after implementation, the known solutions do not offer any possibility of modification on the structure.

Moreover concrete pads leave environmental impacts during its maintenance and disposing off methods.

The overall cost to prepare such concrete pad is also quite high considering raw material, transportation and labour costs.

It is an object of the present invention to remedy fully or partly to at least one of the drawbacks listed above.

In order to do this, the installation according to the invention, in other respects in accordance with the generic definition thereof given in the above preamble, is essentially **characterized in that** the base includes a modular structure comprising a first tray supporting a first bundle of cylinders, a second tray supporting a second bundle of cylinders, a third tray supporting the fuel cell, the first, the second and the third trays being different entities put side by side and being elevated with regard to the soil via respective legs, first and second trays forming supports surface which are situated in a plan different from the plan of the third tray, that is to say at a different height with regard to the soil.

Furthermore, the embodiments might comprise one or more of the following features:
- the base comprises a fourth tray elevated with regard to the soil via respective feet, the fourth tray supporting a control casing,
- the support surfaces of third and the fourth trays are situated in a same plan above the soil,
- the control casing is fastened to at least one of: first, second and third trays,
- the support surface of first and second trays are distant of 5 to 20cm from the plans of support surfaces of the other(s) tray(s),
- first and second trays are less elevated above the soil as compared to the other(s) tray(s),
- the installation comprises at least a separating border between two adjacent trays, the separating border being elevated relative to the support surface between two and ten centimeters,
- first tray is elevated from the soil of distance comprised between twenty five and fifty centimeters,
- at least part of the legs are of self-levelling type for permitting a height adjustment according to the soil surface configuration,
- at least part of the legs are selectively detachable from the trays,
- at least one border of a tray forming an outer border of the base comprises a shock absorbing pad, preferably made from rubber, having a thickness between two and ten centimeters,
- the trays are attached together by attaching organs that can be selectively dismantled.

The invention might also concern every alternative device or process comprising any combination based on the above or below described features wherein:
- figure 1 depicts a schematic a partial view, form above, of a possible example of an installation according to the invention,
- figure 2 depicts a partial side view of the base of the installation of figure 1, seen from the AA direction of figure 1,
- figure 3 depicts a partial side view of the base of the installation of figure 1, seen from the BB direction of figure 1,
- figure 4 depicts a schematic and partial perspective view of the base of the installation of figure 1,
- figure 5 depicts a schematic a partial view, form above, of another example of an installation according to the invention,
- figure 6 depicts a schematic and partial side view, of the base of the installation of figure 1 and taken from the CC direction of figure 1,

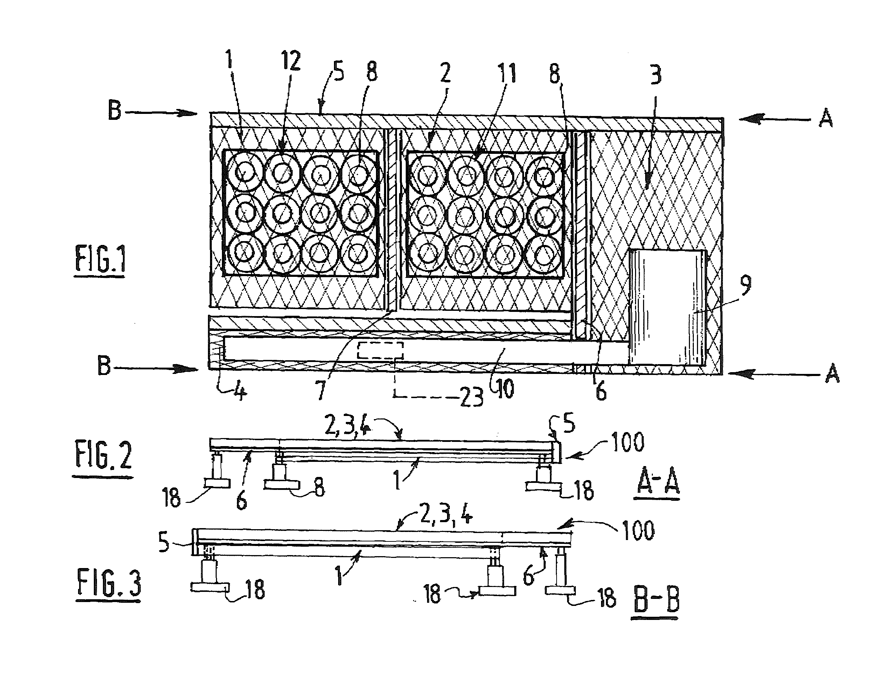

The installation shown at figure 1 comprises a fuel cell 9, preferably of proton exchanging membrane type ("PEMFC"). The installation includes also a device 10, 11, 12 for selectively supplying gaseous hydrogen to the fuel cell 9.

The device 10, 11, 12 for supplying gaseous hydrogen comprising two bundles 11, 12 of gaseous hydrogen cylinders 8 and a common control casing 10. The bundles 11, 12 preferably comprise protective enclosure for the bottles 8. The control casing 10 contains a circuit for controlling the gas taken from the bundles 11, 12 in order to feed the fuel cell 9. The circuit is selectively connected at its upstream end to both bundles 11, 12, of cylinders 8. The circuit is selectively connected at its downstream end to the bundles 11, 12, of cylinders 8 to the fuel cell 9 for supplying gaseous hydrogen to the fuel cell 9.

The circuit, known per se, comprises for example at least a pressure regulator 23 and an automatic inverter organ for switching from one bundle 11 of cylinders 8 to the other bundle 12 of cylinders 8.

The installation is located on a base 100. The base 100 includes a modular structure comprising several trays 1, 2, 3, 4. The trays 1, 2, 3, 4 are preferably selectively attachable together.

The base 100 comprise two trays 1, 2 respectively supporting the two bundles 11, 12 of gas cylinders 8. The two trays 1, 2 for the bundles 11, 12 are preferably identical. They are for example rectangular and arranged edge against edge.

The base 100 comprises also a tray 3 supporting the fuel cell 9 and a tray 4 supporting the control casing 10. The four trays 1, 2, 3, 4 are preferably different entities put side by side so that the base 100 forms from above global rectangular platform.

All the trays are preferably elevated with regard to the soil via respective legs 18. The number and design of supporting legs 18 may vary depending on the total load distribution profile. For example each tray is supported by four legs 18. Preferably the legs 18 are of self-levelling type for permitting relative height adjustments according to the soil surface configuration.

This self-levelling supporting legs 18 structure provides more stability in terms of static and dynamic loads for different soil characteristics which vary from site to site.

Legs 18 are also selectively detachable from the trays 1, 2, 3, 4. The elevation level of the trays 1, 2, 3, 4 above the soil level protects the equipments from flooding and heavy rain events.

As shown on figures 2 to 4, the trays 1, 2 supporting the bundles 11, 12 are situated in a plan different from the plan of the other trays 3, 4. That is to say the supporting surfaces of the bundles 11, 12 are situated at a different height with regard to the soil as compared to the fuel cell 9 and casing 10.

Preferably, the support surfaces of the bundle's trays 1, 2 are situated in a plan situated lower than the plans of the other trays 3, 4. That is to say the trays 1, 2 supporting the bundles 11, 12 are closer to soil as compared to the other trays 3, 4.

The support surfaces of fuel cell 9 tray 3 and control casing 4 tray are preferably situated in the same plan.

The different elevations permits to the forklift operator to easily distinguish among the location for bundles 11, 12 and fuel cell 9. This reduces also the risks of impact of bundles 11, 12 on adjacent and possibly the less rigid trays 3, 4.

For example, the trays 1, 2 supporting the bundles 11, 12 are elevated from the soil of a distance comprised between 25 and 50cm.

For example, the difference of elevation between trays 1, 2 supporting the bundles 11, 12 and the other trays 3, 4 is between 5 to 20cm.

As shown on figures 1 to 3, the base 100 may include separating borders 6, 7 situated between two adjacent trays. The separating border 6, 7 may comprise small barriers elevated relative to the support surfaces, for example between 2 and 10cm. The separating borders 6, 7 might also be coloured for better distinguishing the different supporting areas.

In addition, preferably at least one edge of a tray forming an outer border of the base 100 comprises a shock absorbing pad 5. In particular, the outer edges of the trays 1, 2 supporting the bundles 11, 12 (that is to say the edges facing forklifts and operators for handling the bundles 11, 12) comprise a shock absorbing pad 5. The shock absorbing pad 5 is for example made from rubber or any appropriate material and may have a thickness between 2 and 10cm. This arrangement will lower damages in case of small lateral shocks with forklifts.

The modular structure of the base 100 is preferably a bolted structure which is easily assembled at site and easily transported. The bolts of the structure might be uniquely designed so that the structure can be operated with a unique key for preventing thefts.

The elements composing of the base 100 can be made of any appropriate material of construction such as steel, composite materials, etc. able to withstand load and environmental damages.

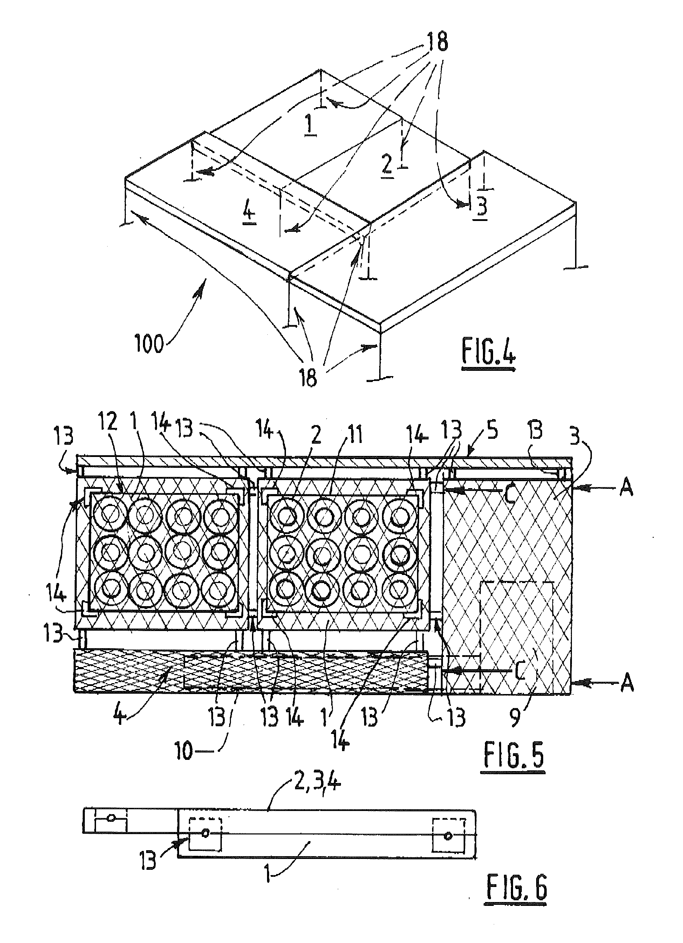

Figures 5 and 6 depict another embodiment of the installation (the common elements with the embodiment of figure 1 bear the same numeral references and are not described again).

As above described, the respective trays 1, 2, 3, 4 are distinct supporting frames which are independent with respect to their individual loads (dynamic and/or static). In the embodiment illustrate at figure 5, the trays 1, 2, 3, 4 are mechanically linked together. The trays 1, 2, 3, 4 are preferably attachable together with anchoring organs 13 such as studs. For example, the two trays 1, 2 supporting the bundles 11, 12 are attached by two or more studs 13. Similarly, one tray 2 supporting a bundle 11 might be attached to the tray 3 supporting the fuel cell by means of two or more studs 13. The tray 4 supporting the control casing 10 might be attached to the other trays 1, 2, 3 by means of one, two or more studs 13. In addition, the shock absorbing pad 5 might be attached to the trays 1, 2 by means of studs 13.

The anchoring studs 13 will provide rigidity to the base 100 among the trays 1, 2, 3, 4. This arrangement helps also in dimensionally streamlining the trays 1, 2, 3,4.

As shown at figure 6, adjacent trays might include respective plates 113 with concentric holes for cooperating respectively with the two ends of the stud 13. Plates might be welded in the trays. For example, studs 13 are threaded at both ends for cooperating with holes. Alternatively, one ends of the stud 13 is welded on one plate the other end of the stud being threaded for cooperating with a corresponding hole.

Trays 1, 2 supporting the bundles 11, 12 might also be individually attached to respective trays 1, 2. For example, as shown on figure 5, several hooks 14 (for example one to four hooks) tie up each bundles 11, 12 to its platform for preventing the pulling out of bundles 11, 12 from the base 100 while they are in operation. The hooks are preferably designed for bearing a lateral force not higher than 400 Newton. During unloading the bundles 11, 12, the corresponding hooks 14 will be detached by a use for permitting the lifting of the bundle by means of a forklift or a crane. The hooks 14 are preferably tied up with the supporting tray 1, 2 through a metallic sling. The metallic sling will be adjusted on the tray 1, 2 with the bundle 11, 12 on its position.

The surface of the base 100 is based on total equipments load distribution profiles, including static and dynamic loads of the equipments.

The support surface of the trays might be designed (irregularities or coated) for providing friction to avoid free sliding of the elements supported.

This structure can thus be deployed with either reduced soil preparation or no soil preparation and typically has no requirement for open cut foundations and piles.

Due to its modular structure and installed with no soil preparation, the base can be deployed at any point of time in the whole year considering countries having a variety of seasons throughout the year.

The installation and especially the base 100 are easily removable with no or reduced environmental damages for its maintenance and disposing off.

The base is also easily transportable on one single transport and has elements that can be loaded and unloaded from a truck, deployed to the site and removed from the site by the installation team without any specific lifting devices, crane or forklift. For this reason, the unit masse of each element composing the base is preferably limited to a maximum of 100 kg.

The base 100 structure has in addition a good stability resisting to lateral shock loads resulting from the impact of forklifts, for example when unloading the bundles 11, 12.

The modular structure of the base helps to create a standardized product which optimizes the cost of manufacturing and reduces the cost of transportation. The base 100 can be transported with a fuel cell assembly on a same limited capacity truck. The structure also reduces the costs of assembling at site and the efforts in redesigning the structure based on different soil parameters and varying loads.

Curing like methods for concrete padding are not required anymore. The base 100 can be implemented to the sites at any season of the year even during rainy seasons.

Modifications can be done easily to the number and relative positions of the trays according to the type of installation concerned.

For example, instead or in addition to the tray dedicated to the control casing 10, the control casing 10 might fastened directly to at least one of the other trays 1, 2, 3. For example, this fastening might be done by the sale organs (studs13) as described above.

Preferably, the base 100 structure allows transferring the lateral forces of the control casing to the trays 1, 2, 3. Lateral forces means the forces parallel to the direction AA on figures 1 or 5.

Tray 4 supporting the control casing 10 can be a passive or active structure for transferring those forces.

## Claims

1. Installation for producing and supplying electricity including a fuel cell (9), notably of proton exchanging membrane type, a device (10, 11, 12) for supplying gaseous hydrogen under pressure to the fuel cell (9), the device (10, 11, 12) for supplying gaseous hydrogen comprising at least a bundle (11, 12) of a plurality of pressurized hydrogen cylinders (8), a control casing (10), the control casing (10) containing circuit for controlling and supplying the gas taken from the bundle(s) (11, 12) of cylinders (8) to the fuel cell (9), the circuit being selectively connected to the bundle(s) (11, 12) of cylinders (8) and to the fuel cell (9) and comprising at least a pressure regulator (23), the installation being arranged on a base (100), **characterized in** the that the base (100) includes a modular structure comprising a first tray (1) supporting a first bundle (12) of cylinders (8), a second tray (2) supporting a second bundle (11) of cylinders (8), a third tray (3) supporting the fuel cell (9), the first (1), the second (2) and the third (3) trays being different entities put side by side and being elevated with regard to the soil via respective legs (18), first (1) and second trays (2) forming supports surface which are situated in a plan different from the plan of the third (3) tray, that is to say at a different height with regard to the soil.

2. Installation according to claim 1, **characterized in that** the base (100) comprises a fourth tray (4) elevated with regard to the soil via respective feet (8), the fourth tray (4) supporting a control casing (10).

3. Installation according to claim 2, **characterized in that** the support surfaces of third (3) and the fourth (4) trays are situated in a same plan above the soil.

4. Installation according to any of claims 1 to 3, **characterized in that** the control casing (10) is fastened to at least one of: first (1), second (2) and the third (3) tray.

5. Installation according to any of claims 1 to 4, **characterized in that** the support surface of first (1) and second (2) trays are distant of 5 to 20cm from the plans of support surfaces of the other(s) tray(s).

6. Installation according to any of claims 1 to 5, **characterized in that** first (1) and second (2) trays are less elevated above the soil as compared to the other(s) tray(s).

7. Installation according to any of claims 1 to 5, **characterized in that** it comprises at least a separating border (6, 7) between two adjacent trays (1, 2, 3), the separating border being elevated relative to the support surface between 2 and 10cm.

8. Installation according to any of claims 1 to 7, **characterized in that** first tray (1) is elevated from the soil of distance comprised between 25 and 50cm.

9. Installation according to any of claims 1 to 8, **characterized in that** at least part of the legs (18) are of self-levelling type for permitting a height adjustment according to the soil surface configuration.

10. Installation according to any of claims 1 to 9, **characterized in that** at least part of the legs (18) are selectively detachable from the trays (1, 2, 3, 4).

11. Installation according to any of claims 1 to 10, **characterized in that** at least one border of a tray (1, 2, 3, 4) forming an outer border of the base (100) comprise a shock absorbing pad (5), preferably made from rubber, having a thickness between 2 and 10cm.

12. Installation according to any of claims 1 to 11, **characterized in that** the trays (1, 2, 3, 4) are attached together by attaching organs (13) that can be selectively dismantled.
